(19) Europäisches Patentamt
European Patent Office
Office européen des brevets

(11) **EP 3 645 764 B1**

(12) **FASCICULE DE BREVET EUROPEEN**

(45) Date de publication et mention de la délivrance du brevet:
**19.01.2022 Bulletin 2022/03**

(21) Numéro de dépôt: **17746189.4**

(22) Date de dépôt: **30.06.2017**

(51) Classification Internationale des Brevets (IPC):
*C22C 38/04* (2006.01)    *B23K 11/16* (2006.01)
*C22C 38/58* (2006.01)    *C22C 38/48* (2006.01)
*C22C 38/40* (2006.01)    *C22C 38/26* (2006.01)
*C22C 38/18* (2006.01)    *B23K 11/00* (2006.01)
*B23K 11/30* (2006.01)    *B23K 11/11* (2006.01)
*B23K 101/00* (2006.01)    *B23K 103/04* (2006.01)
*B23K 101/18* (2006.01)

(52) Classification Coopérative des Brevets (CPC):
**C22C 38/04; B23K 11/115; B23K 11/16;**
**C22C 38/18; C22C 38/26; C22C 38/40;**
**C22C 38/48; C22C 38/58;** B23K 2101/006;
B23K 2101/18; B23K 2103/05

(86) Numéro de dépôt international:
**PCT/IB2017/053975**

(87) Numéro de publication internationale:
**WO 2019/002924 (03.01.2019 Gazette 2019/01)**

(54) **PROCÉDÉ DE SOUDAGE PAR POINTS DE TÔLES D'ACIER INOXYDABLE MARTENSITIQUE**

PUNKTSCHWEISSVERFAHREN FÜR MARTENSITISCHE ROSTFREIE STÄHLE

SPOT WELDING METHOD FOR MARTENSITIC STAINLESS STEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**06.05.2020 Bulletin 2020/19**

(73) Titulaire: **Aperam**
**1882 Luxembourg (LU)**

(72) Inventeurs:
• **PETIT, Bertrand**
**62260 Auchel (FR)**
• **BRIDAULT, Frédéric**
**62120 Racquinghem (FR)**

(74) Mandataire: **Lavoix**
**2, place d'Estienne d'Orves**
**75441 Paris Cedex 09 (FR)**

(56) Documents cités:
**EP-A1- 0 170 598**     **EP-A1- 2 987 581**
**WO-A1-2017/069268**

• **Vishvesh J Badheka ET AL: "RESISTANCE SPOT WELDING OF MARTENSITIC STAINLESS STEEL (SS420) -PART I", International Journal of Mechanical and Materials Engineering (IJMME), 31 décembre 2009 (2009-12-31), pages 328-340, XP055415022, Extrait de l'Internet: URL:http://ejum.fsktm.um.edu.my/article/82 2.pdf [extrait le 2017-10-12]**

**Description**

La présente invention concerne la sidérurgie, et particulièrement les procédés de soudage par points de tôles d'acier.

On connaît des tôles d'acier inoxydable martensitique transformées à chaud, dont l'ajustement de la composition, de la microstructure initiale et des paramètres de leurs traitements thermiques ont permis de procurer des caractéristiques mécaniques élevées et une grande aptitude à être mises en forme de façon complexe. De telles tôles sont décrites dans le document PCT/IB2017/051636 au nom du Demandeur, et sont destinées principalement à l'industrie automobile.

Leur composition est la suivante, en pourcentages pondéraux :

* $0,005\% \leq C \leq 0,3\%$ ;
* $0,2\% \leq Mn \leq 2,0\%$ ;
* traces $\leq Si \leq 1,0\%$ ;
* traces $\leq S \leq 0,01\%$ ;
* traces $\leq P \leq 0,04\%$ ;
* $10,5\% \leq Cr \leq 17,0\%$ ; de préférence $10,5\% \leq Cr \leq 14,0\%$ ;
* traces $\leq Ni \leq 4,0\%$ ;
* traces $\leq Mo \leq 2,0\%$ ;
* $Mo + 2 \times W \leq 2,0\%$ ;
* traces $\leq Cu \leq 3\%$ ; de préférence traces $\leq Cu \leq 0,5\%$ ;
* traces $\leq Ti \leq 0,5\%$ ;
* traces $\leq Al \leq 0,2\%$ ;
* traces $\leq O \leq 0,04\%$ ;
* $0,05\% \leq Nb \leq 1,0\%$ ;
* $0,05\% \leq Nb + Ta \leq 1,0\%$ ;
* $0,25\% \leq (Nb + Ta)/(C + N) \leq 8$ ;
* traces $\leq V \leq 0,3\%$ ;
* traces $\leq Co \leq 0,5\%$ ;
* traces $\leq Cu + Ni + Co \leq 5,0\%$ ;
* traces $\leq Sn \leq 0,05\%$ ;
* traces $\leq B \leq 0,1\%$ ;
* traces $\leq Zr \leq 0,5\%$ ;
* $Ti + V + Zr \leq 0,5\%$ ;
* traces $\leq H \leq 5$ ppm, de préférence traces $\leq H \leq 1$ ppm ;
* traces $\leq N \leq 0,2\%$ ;
* $(Mn + Ni) \geq (Cr - 10,3 - 80 \times [(C + N)^2])$ ;
* traces $\leq Ca \leq 0,002\%$ ;
* traces $\leq$ terres rares et/ou $Y \leq 0,06\%$ ;
* le reste étant du fer et des impuretés résultant de l'élaboration ;

- la température de début de transformation martensitique (Ms) de la tôle étant $\geq 200°C$ ;
- et la température de fin de transformation martensitique (Mf) de la tôle étant $\geq -50°C$.

La microstructure de la tôle initiale, qui a été obtenue par des moyens appropriés pouvant inclure des opérations de transformation à chaud et/ou à froid, est composée de ferrite et/ou de martensite revenue et de 0,5% à 5% en volume de carbures, et la taille des grains ferritiques est de 1 à 80 μm, de préférence de 5 à 40 μm. Cette tôle initiale a une épaisseur de 0,1 à 10 mm et plus typiquement de 0,1 mm à 6 mm.

Le procédé de traitement qui leur est typiquement appliqué débute par une austénitisation de la tôle, c'est-à-dire par une élévation de sa température au-dessus de la température Ac1 de l'acier de façon à former de l'austénite à la place de la ferrite et des carbures constituant la microstructure de départ, et dans des conditions qui limitent autant que possible la décarburation et l'oxydation superficielles de la tôle. Il ne subsiste typiquement que 20% au plus de ferrite résiduelle et 0,5% au plus de carbures.

Puis on exécute successivement plusieurs étapes de mise en forme à chaud de la tôle (au moins deux) dans des conditions de température et de durée telles que la structure à faibles teneurs en ferrite et carbures obtenue après l'austénitisation est conservée pendant toute la mise en forme. Ces mises en forme à chaud ont lieu à une température supérieure à la température Ms de début de la transformation martensitique. Au besoin, on peut procéder à des réchauffages ou à des maintiens en température entre les mises en forme à chaud, ou pendant celles-ci, au moyen d'outils chauffants, de façon à ce que la température de la tôle en cours de mise en forme et entre les mises en forme (pendant les transferts de la tôle d'un outil à l'autre, ou si la tôle demeure sur le même outil, pendant les changements de configuration de l'outil) ne descende pas en-dessous de Ms.

Il doit être entendu que par le terme d'« étape de mise en forme à chaud», on inclut des opérations de déformation ou d'enlèvement de matière aussi diverses que, notamment, des emboutissages profonds, des emboutissages à chaud, des estampages, des découpes, des perçages, ces étapes pouvant avoir lieu dans n'importe quel ordre au choix du fabricant.

Après la mise en forme à chaud, la pièce obtenue est refroidie, sans qu'il y ait de contraintes particulières sur les conditions de refroidissement.

Au cours du refroidissement, une étape de découpe ou d'ultime mise en forme à chaud peut être effectuée entre Ms et Mf. (température de fin de transformation martensitique), dans des conditions où la microstructure est constituée d'au moins 10% d'austénite, d'au plus 20% de ferrite, le reste étant de la martensite.

La tôle ainsi obtenue possède des propriétés mécaniques élevées à température ambiante, du fait notamment de sa teneur élevée en martensite. Typiquement, la résistance à la traction Rm est d'au moins 1000 MPa, la limite élastique Re est d'au moins 800 MPa, l'allongement à la rupture A mesuré selon la norme ISO 6892 est d'au moins 8%, et la capacité d'angle de pliage pour une épaisseur de 1,5 mm est d'au moins 60°, mesurée selon la norme VDA 238-100. Cela implique que la tôle finale obtenue présente une excellente formabilité et est utilisable notamment dans l'industrie automobile, ou pour constituer des pièces à fonction structurale dans l'aéronautique, le bâtiment ou le ferroviaire.

Au final, après le refroidissement jusqu'à la température ambiante qui suit la dernière mise en forme, la microstructure de la tôle contient au maximum 0,5% de carbures en fraction volumique et au maximum 20% de ferrite résiduelle en fraction volumique, le reste étant de la martensite.

Ces tôles, dont l'épaisseur est typiquement de 0,10 à 6,0 mm, présentent cependant un inconvénient, qui est que leur soudabilité peut parfois être considérée comme insuffisante, lorsque la soudure est réalisée par un procédé de soudage par points dans les conditions les plus habituelles chez les constructeurs automobiles. Il s'avère que dans les zones soudées, on n'obtient pas facilement une résistance à la traction en croix qui serait suffisante pour une épaisseur de la tôle donnée (c'est-à-dire typiquement d'au moins 450 daN pour des tôles d'épaisseur 1,2mm) : le matériau est trop fragile au niveau de la soudure.

On connait par ailleurs du document EP0170598 A1 un acier inoxydable martensitique dont la résistance mécanique est de 1210 MPa.

Les résultats ont pu être améliorés en modifiant les paramètres du soudage, c'est-à-dire en ajoutant aux cycles de soudage standard des pulses de post-chauffage comme habituellement utilisés avec les aciers martensitiques, mais les optimisations réalisées jusqu'ici n'avaient pas permis d'obtenir une qualité de soudure satisfaisante pour des cycles de soudage de durée inférieure à 5 s. Cette durée est nettement trop élevée pour que les constructeurs automobiles puissent souder ces tôles en respectant les contraintes de productivité auxquelles ils sont confrontés pour une application à des véhicules de grande série. Une durée totale de cycle de soudage de l'ordre de 1 s au plus serait alors à viser à cet effet. Un cycle de soudage de durée totale de 1,5 s, voire 2 s, pourrait parfois être acceptable.

On connaît par ailleurs du document WO 2017/069268 A1 un procédé de soudage par point en trois étapes pour des aciers à haute résistance mécanique. Vishvesh J Badheka ET AL: "RESISTANCE SPOT WELDING OF MARTENSITIC STAINLESS STEEL (SS420) -PART I",International Journal of Mechanical and Materials Engineering (IJMME), 31 décembre 2009 (2009-12-31), pages 328-340, divulgue un procédé de soudage pour un acier martensitique inoxydable.

Le but de l'invention est de proposer un cycle de soudage par points spécialement adapté à l'emploi des tôles d'acier inoxydable martensitique pour emboutissage à chaud précédemment décrites, et qui permette de réaliser ce soudage dans des conditions industriellement convenables pour l'industrie automobile.

A cet effet, l'invention a pour objet un procédé de soudage de deux tôles d'acier suivant les revendications.

Comme on l'aura compris, l'invention consiste à appliquer aux tôles auxquelles l'invention s'adresse en priorité, et dont la composition a été précisée plus haut, un cycle de soudage par points particulier dans le choix de ses paramètres et de sa séquence d'opérations.

On rappelle que les conditions d'exécution d'un soudage par points sont suffisamment définies par :

- la pression exercée par les électrodes de soudage sur les pièces à souder, qui influe sur la résistance de contact, conjointement à la composition chimique et la rugosité de la surface des pièces ;
- l'intensité du courant qui traverse la zone à souder, et qui est soumise à une régulation qui pilote l'alimentation en courant de l'installation, en fonction des autres paramètres non strictement maîtrisables ;
- la durée du soudage ou de ses différentes étapes.

Ainsi, la différence de potentiel entre les deux tôles varie selon la résistance de contact, et de même, par conséquent, la puissance injectée dans la région du soudage. Cette différence de potentiel et cette puissance ne représentent pas directement elles-mêmes des paramètres du procédé, mais sont subies du fait des conditions opératoires maîtrisables et maîtrisées que sont l'effort de serrage et l'intensité du courant.

Le soudage commence par une première étape, au cours de laquelle on fait passer un courant électrique d'intensité régulée dans les tôles à souder, mises préalablement au contact l'une de l'autre par un effort. L'effort à appliquer et la durée du courant sont habituellement dictés par la norme visée par l'utilisateur (par exemple : SEP1220, ou ISO18278-2). Une fois ces deux paramètres choisis et imposés, l'utilisateur fait varier le courant de soudage jusqu'à l'expulsion de métal fondu qui constitue la valeur d'intensité maximale du domaine de soudabilité. L'intensité du courant de soudage de l'invention se situe dans un domaine compris entre 80% et 100% de cette intensité maximale. Typiquement, dans le cas de l'invention, cette intensité du courant de soudage est de 5,5 kA lorsque les tôles à souder ont une épaisseur de 1,2 mm. De manière générale, l'intensité de soudage maximale tolérable correspondant à l'expulsion de métal fondu est obtenue expérimentalement par une méthode normée, voir par exemple les normes SEP 1220 et ISO 18278-2. Sa détermination par l'homme du métier, dans chaque cas particulier auquel il est confronté pour la mise en œuvre de l'invention, est donc à réaliser lors de la phase de mise au point du processus de soudage précis effectué selon l'invention. Mais cette détermination n'est pas typique de l'invention, comme la question de l'optimisation de l'intensité du courant de soudage peut se rencontrer dans toute exécution d'un procédé de soudage par points, et s'effectue de façon classique comme on l'a dit.

L'effort F en daN pour les épaisseurs e de 0,1mm à 1,50 mm est exprimé par l'équation :

$$F = 250 \times e + 90$$

et pour les épaisseurs de 1,51 mm à 6 mm par l'équation :

$$F = 180 \times e + 150$$

e étant l'épaisseur des deux tôles soudées, ou de la plus fine d'entre elles si elles sont d'épaisseurs différentes.

Une variation de l'effort F de ± 10% autour de ces valeurs exprimées est autorisée.

Le temps de soudage t en ms est également exprimé, pour les épaisseurs de 0,10 à 0,50 mm, par l'équation :

$$t = 40 \times e + 36$$

pour les épaisseurs de 0,51 à 1,50 mm :

$$t = 124 \times e - 13$$

et pour les épaisseurs de 1,51 à 6,0 mm

$$t = 12 \times e + 47$$

Une variation de ± 10% autour des valeurs exprimées est autorisée.

Dans une deuxième étape, on maintient la pression des électrodes et le passage du courant est supprimé ou fortement réduit, et on impose une intensité de 1 kA au maximum, et idéalement de 0 kA, pendant un temps minimum tf exprimé en ms par l'équation :

$$tf \geq 34 \times e + 2$$

Cela conduit à un refroidissement brutal des tôles dans la zone de soudure jusqu'à une température située entre Ac1 et Ac5, intervalle de température conduisant à une réausténitisation de la zone.

Dans une troisième étape, le courant électrique est rétabli, à une valeur d'intensité comprise entre 3,5 et 4,5 kA, de façon à maintenir la température entre Ac1 et Ac5 et exécuter un traitement thermique sur la zone soudée, qui va modifier ses caractéristiques structurelles et lui conférer les propriétés mécaniques désirées. Cette troisième étape doit durer au moins 755 ms pour être assurément efficace, et il n'y a pas de durée maximale exigée. Plus elle est longue et plus le traitement thermique est efficace et procure une résistance à la traction en croix assurément élevée. Mais on a intérêt à ne pas prolonger excessivement cette troisième étape pour ne pas allonger le cycle de soudage en lui conférant une durée incompatible avec les exigences d'une production industrielle. Avantageusement, comme on l'a dit, il est préférable que la durée totale des trois étapes du cycle de soudage n'excède pas 2 s, de préférence n'excède pas 1,5 s, optimalement n'excède pas 1 s.

Si on exécute ce traitement dans les conditions qui ont été dites, on peut obtenir une résistance à la traction en croix atteignant les valeurs adéquates visées pour les épaisseurs de tôles considérées, voire les dépassant, et pour une durée de cycle de soudage de l'ordre de 1 s voire moins, donc compatible avec les impératifs industriels courants des constructeurs automobiles pour les véhicules de grande série. On peut donc profiter dans de bonnes conditions économiques, sur des tôles soudées par points, des avantages du procédé décrit dans PCT/IB2017/051636, relatifs à la réalisation aisée d'une pièce de forme complexe en un acier inoxydable martensitique transformé à chaud et à propriétés mécaniques élevées, de composition bien définie.

L'invention sera mieux comprise à la lecture de la description qui suit, donnée en référence aux figures annexées suivantes :

- La figure 1 qui montre une micrographie de la zone soudée dans le cas du soudage de deux tôles selon un procédé non conforme à l'invention ;
- La figure 2 qui montre un détail de la zone soudée de la figure 1 ;
- La figure 3 qui montre une micrographie de la zone soudée après la deuxième étape d'un procédé selon l'invention, donc dans un état intermédiaire précédant la troisième étape de soudage, et montrant la disparition de la ferrite résiduelle à ce stade ;
- La figure 4 qui montre une micrographie de la zone soudée après l'exécution complète d'un procédé conforme à l'invention.
- La figure 5 qui montre un détail de la zone soudée de la figure 4 ;

Des expériences menées par les inventeurs sur le soudage de deux tôles de composition, en pourcentages pondéraux, Cr = 11,02% ; Nb = 0,11% ; Mn = 0,50% ; C = 0,059% ; N = 0,0107% ; le reste étant du fer et des impuretés résultant de l'élaboration, à l'état austénitisé et trempé sous presse, relevant donc de l'invention décrite dans PCT/IB2016/052302, et de 1,2 mm d'épaisseur, ont donné les résultats suivants.

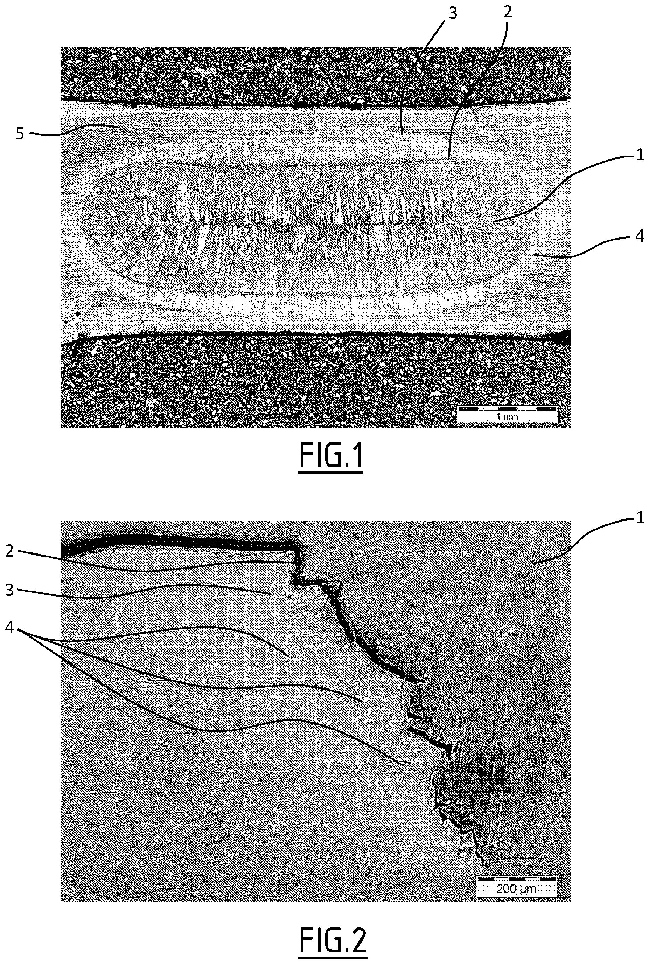

Dans une première série d'expériences, on a appliqué un cycle de soudage classique de durée totale de 560 ms, comportant l'application entre les électrodes, sous une pression de 4000 N, d'un courant d'une intensité de 5,5 kA pendant 280 ms, suivie par une période d'intensité nulle de 280 ms pendant laquelle la pression était maintenue (paramètres dictés par la norme ISO 18278-2 et habituellement utilisés par les constructeurs automobiles). On en voit les résultats sur les figures 1 et 2, qui montrent des micrographies de la zone soudée. On constate, au centre de la figure 1, la présence de la zone fondue 1 correspondant à la soudure proprement dite, et autour d'elle la Zone Affectée par la Chaleur (ZAC, en anglais « Heat-Affected Zone », HAZ). La zone fondue 1 est longée par une fissure 2 qui se propage à l'intérieur de la ZAC 3 à taille de grain élevée, au sein de laquelle on distingue de la ferrite 4, en blanc (clairement visible aussi sur la figure 1). C'est cette ferrite 4, fragile, qui est responsable de la propagation de la fissure 2, et donc de la médiocre résistance à la traction en croix. La proportion de ferrite dans la ZAC 3 est de 20 à 80% selon les zones, ce qui est nettement plus élevé que ce à quoi on pouvait s'attendre par la simple consultation des diagrammes d'équilibre. La résistance à la traction en croix mesurée est de 290 daN, donc très insuffisante pour les besoins des constructeurs automobiles, par exemple.

Des réductions de la durée de l'application du courant (de 280 ms à 140 ms) ont été bénéfiques en ce qu'elles ont permis de diminuer l'ampleur de la ZAC 3 à taille de grain élevée, et de diminuer le taux de ferrite résiduelle sans modifier significativement la zone fondue 1. Cependant, la ZAC 3 contient toujours une quantité de ferrite fragile, et la résistance à la traction en croix n'est pas suffisamment améliorée.

Dans une deuxième série d'expériences, selon l'invention, après une première étape identique à celle des expériences précédentes, on a interrompu le passage du courant pendant 46 ms en maintenant la pression des électrodes. Puis on a ajouté une troisième étape au procédé précédent, dans laquelle on a repris le passage du courant à une intensité de 4 kA pendant une durée de 814 ms, pour effectuer un traitement thermique de la zone soudée.

Au total le cycle a donc duré, dans le cas de l'exemple selon l'invention, 140 + 46 + 814 = 1000 ms.

L'objectif est de parvenir à une soudure des deux pièces qui ne représente pas un point faible de l'assemblage, autrement dit que la résistance à la traction en croix au niveau de la zone soudée soit suffisante à cet effet, et de réaliser cette soudure pendant une durée totale du cycle qui assure à l'installation une productivité satisfaisante dans des conditions industrielles. Typiquement, une durée du cycle de soudage de l'ordre de 1 s comme dans l'exemple décrit est un tel résultat satisfaisant pour une production en grande série de tôles soudées pour l'industrie automobile.

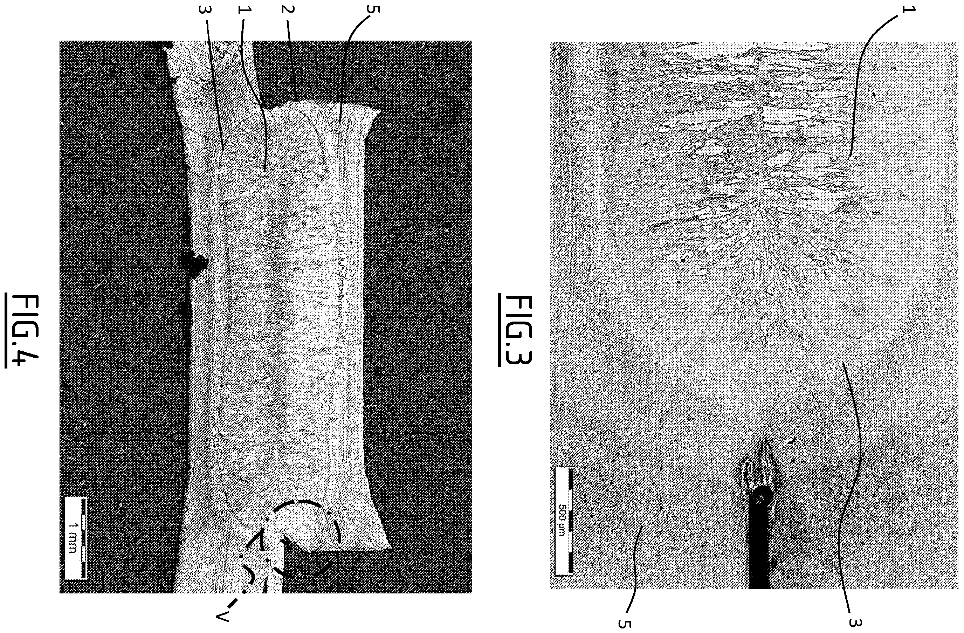

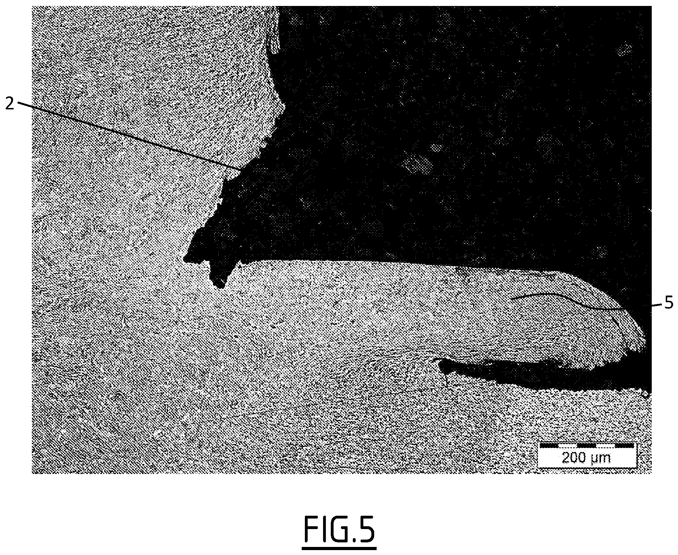

La figure 3 montre l'aspect de la zone de soudage que l'invention permet ainsi d'obtenir après la deuxième étape du procédé selon l'invention qui n'a duré que 46 ms. Les figures 4 et 5 montrent la zone de soudage après l'exécution de l'intégralité du procédé selon l'invention. Les gros grains ferritiques de la ZAC 1 de la figure 4 ont non seulement disparu, mais la ZAC 3 et la zone fondue 1 ont une ténacité telle que la fissure 2 dont la trace est visible sur la figure 5 dévie dans le métal de base 5.

On obtient ainsi une résistance à la traction en croix supérieure à 450 daN au niveau du cordon de soudure, ce qui est l'objectif qui était à atteindre dans l'exemple décrit, compte tenu de l'épaisseur des tôles à souder.

Les inventeurs expliquent les avantages du procédé selon l'invention, par rapport aux procédés plus classiques de soudage par points, par la somme des facteurs suivants, dont il apparaît qu'elle présente un effet synergétique remarquable qui n'était pas attendu.

L'exécution d'un premier cycle de soudage rapide permet de réduire le temps de séjour au dessus du point Ac5 et de minimiser la partition des éléments gammagènes et alphagènes conduisant à la formation de ferrite à gros grain en ZAT. Ainsi, on constate que la ferrite 4 en blanc sur la figure 1 a totalement disparu de la ZAT 3 de la figure 3.

L'interruption de la circulation du courant lors de la deuxième étape (ou au moins la diminution drastique de l'intensité du courant) provoque un refroidissement de la zone de soudage, jusqu'à une température de réausténitisation de l'ordre de 900°C.

Une troisième étape où le courant est rétabli avec une intensité relativement importante, quoique moindre que lors de la première étape, permet d'annihiler définitivement la présence de ferrite résiduelle à gros grains en ZAT au pourtour de la zone de recouvrement et de retrouver des propriétés mécaniques satisfaisantes (figures 4 et 5). On distingue par ailleurs que la fissuration 2 de la figure 4 ne suit plus la ZAT comme sur la figure 1, et qu'elle s'effectue dans le métal de base 5 de la figure 4, laissant un bouton de grand diamètre sur l'une des deux tôles.

Les tôles utilisées pour la mise en œuvre de l'invention peuvent avoir été laminées à chaud ou à froid. Ce qui est important est, d'une part, que leur composition et leur microstructure soient conformes à ce qui a été dit, et d'autre part que leur épaisseur soit parmi celles qui autorisent un soudage par points, donc de 0,10 à 6,0 mm,

**Revendications**

1. Procédé de soudage de deux tôles d'acier d'épaisseur 0,10 à 6,0 mm et de composition, en pourcentages pondéraux :

   * $0,005\% \leq C \leq 0,3\%$ ;
   * $0,2\% \leq Mn \leq 2,0\%$ ;
   * $traces \leq Si \leq 1,0\%$ ;
   * $traces \leq S \leq 0,01\%$ ;
   * $traces \leq P \leq 0,04\%$ ;
   * $10,5\% \leq Cr \leq 17,0\%$ ; de préférence $10,5\% \leq Cr \leq 14,0\%$ ;
   * $traces \leq Ni \leq 4,0\%$ ;
   * $traces \leq Mo \leq 2,0\%$ ;
   * $Mo + 2 \times W \leq 2,0\%$ ;
   * $traces \leq Cu \leq 3\%$ ; de préférence $traces \leq Cu \leq 0,5\%$ ;
   * $traces \leq Ti \leq 0,5\%$ ;
   * $traces \leq Al \leq 0,2\%$ ;
   * $traces \leq O \leq 0,04\%$ ;
   * $0,05\% \leq Nb \leq 1,0\%$ ;

* 0,05% ≤ Nb + Ta ≤ 1,0% ;
* 0,25% ≤ (Nb + Ta )/(C + N) ≤ 8 ;
* traces ≤ V ≤ 0,3% ;
* traces ≤ Co ≤ 0,5% ;
* traces ≤ Cu + Ni + Co ≤ 5,0% ;
* traces ≤ Sn ≤ 0,05% ;
* traces ≤ B ≤ 0,1% ;
* traces ≤ Zr ≤ 0,5% ;
* Ti + V + Zr ≤ 0,5% ;
* traces ≤ H ≤ 5 ppm, de préférence traces ≤ H ≤ 1 ppm ;
* traces ≤ N ≤ 0,2% ;
* (Mn + Ni) ≥ (Cr -10,3 - 80 × [(C + N)$^2$]) ;
* traces ≤ Ca ≤ 0,002% ;
* traces ≤ terres rares et/ou Y ≤ 0,06% ;
* le reste étant du fer et des impuretés résultant de l'élaboration ;
- la température de début de transformation martensitique (Ms) de la tôle étant ≥ 200°C ;
- la température de fin de transformation martensitique (Mf) de la tôle étant ≥ -50°C ;
- la microstructure de la tôle contenant au maximum 0,5% de carbures en fraction volumique et au maximum 20% de ferrite résiduelle en fraction volumique, le reste étant de la martensite ;

**caractérisé en ce qu'**il comporte les étapes suivantes, (e) étant l'épaisseur de chacune desdites tôles ou de la plus fine d'entre elles ;

- Une première étape de soudage, de durée (t) en ms :

* pour les épaisseurs (e) de 0,10 à 0,50 mm :

$$t = (40 \times e + 36) \pm 10\%$$

* pour les épaisseurs (e) de 0,51 à 1,50 mm :

$$t = (124 \times e - 13) \pm 10\%$$

* pour les épaisseurs (e) de 1,51 à 6,0 mm

$$t = (12 \times e + 47) \pm 10\%$$

et de force de serrage (F) en daN :
* pour les épaisseurs (e) de 0,10 à 1,50 mm :

$$F = (250 \times e + 90) \pm 10\%$$

* pour les épaisseurs (e) de 1,51 mm à 6,0 mm :

$$F = (180 \times e + 150) \pm 10\%$$

pendant laquelle on applique entre les électrodes de soudage un courant d'une intensité comprise entre 80 et 100% de l'intensité maximale autorisée correspondant à l'expulsion de métal fondu ;

- Une deuxième étape durant laquelle on maintient la pression des électrodes et on fixe l'intensité du courant entre zéro et 1 kA pendant une durée minimale tf = 34 x e + 2 ms ;
- Et une troisième étape, pendant laquelle on reprend le passage du courant à une intensité de 3,5 kA à 4,5 kA, pendant une durée d'au moins 755 ms, pour effectuer un traitement thermique de la zone soudée,

la somme des durées desdites première, deuxième et troisième étapes étant au maximum de 2 s, de préférence au maximum de 1,5 s, mieux au maximum de 1

2. Procédé selon la revendication 1, **caractérisé en ce que** lors de la deuxième étape on interrompt le passage du courant dans la zone soudée.

3. Procédé selon l'une des revendications 1 ou 2, **caractérisé en ce que** lesdites tôles sont des tôles laminées à chaud.

**Patentansprüche**

1. Verfahren zum Schweißen von zwei Stahlblechen mit einer Stärke von 0,10 bis 6,0 mm und einer Zusammensetzung in gewichteten Prozent:

* 0,005 % ≤ Fe ≤ 0,3 %;
* 0,2 % ≤ Fe ≤ 2,0 %;
* Spuren ≤ Si ≤ 1,0 %;
* Spuren ≤ S ≤ 0,01 %;
* Spuren ≤ P ≤ 0,04 %;
* 10,5 % ≤ Cr ≤ 17,0 %; vorzugsweise 10,5 % ≤ Cr ≤ 14,0 %;
* Spuren ≤ Ni ≤ 4,0 %;
* Spuren ≤ Mo ≤ 2,0 %;
* Mo + 2 × W ≤ 2,0 %;
* Spuren ≤ Cu ≤ 3 %; vorzugsweise Spuren ≤ Cu ≤ 0,5 %;
* Spuren ≤ Ti ≤ 0,5 %;
* Spuren ≤ Al ≤ 0,2 %;
* Spuren ≤ O ≤ 0,04 %;
* 0,05 % ≤ Fe ≤ 1,0 %;
* 0,05 % ≤ Nb + Ta ≤ 1,0 %;
* 0,25 % ≤ (Nb + Ta)/(C + N) ≤ 8;
* Spuren ≤ V ≤ 0,3 %;
* Spuren ≤ Co ≤ 0,5 %;
* Spuren ≤ Cu + Ni + Co ≤ 5,0 %;
* Spuren ≤ Sn ≤ 0,05 %;
* Spuren ≤ B ≤ 0,1 %;

* Spuren ≤ Zr ≤ 0,5 %;

* Ti + V + Zr ≤ 0,5 %;

* Spuren ≤ H ≤ 5 ppm, vorzugsweise Spuren ≤ H ≤ 1 ppm;

* Spuren ≤ N ≤ 0,2 %;

* (Mn + Ni) ≥ (Cr -10,3 - 80 × [(C + N)²]);

* Spuren ≤ Ca ≤ 0,002 %;

* Spuren ≤ Seltene Erden und/oder Y ≤ 0,06 %;

* wobei der Rest Eisen und Verunreinigungen aus der Verarbeitung sind;

- wobei die Anfangstemperatur einer martensitischen Umwandlung (Ms) des Blechs ≥ 200 °C ist;

- wobei die Endtemperatur der martensitischen Umwandlung (Mf) des Blechs ≥ -50 °C ist;

- wobei die Mikrostruktur des Blechs höchstens 0,5 % Karbide in Volumenanteil und höchstens 20 % Restferrit in Volumenanteil enthält, wobei der Rest Martensit ist;

**dadurch gekennzeichnet, dass** es die folgenden Schritte umfasst, wobei (e) die Stärke von jedem der Blech oder des dünnsten davon ist;

- einen ersten Schweißschritt mit der Dauer (t) in ms:

* für Stärken (e) von 0,10 bis 0,50 mm:

$$t = (40 \times e + 36) \pm 10 \%$$

* für Stärken (e) von 0,51 bis 1,50 mm:

$$t = (124 \times e - 13) \pm 10 \%$$

* für Stärken (e) von 1,51 bis 6,0 mm

$$t = (12xe + 47) \pm 10 \%$$

und Spannkraft (F) in daN:
* für Stärken (e) von 0,10 bis 1,50 mm:

$$F = (250 \times e + 90) \pm 10 \%$$

* für Stärken (e) von 1,51 mm bis 6,0 mm:

$$F= (180 \times e + 150) \pm 10 \%$$

während der zwischen den Schweißelektroden ein Strom mit einer Stromstärke zwischen 80 und 100 % der maximal zulässigen Stromstärke angelegt wird, die dem Austreiben von geschmolzenem Metall entspricht;

- einen zweiten Schritt, bei dem der Elektrodendruck aufrechterhalten wird und die Stromstärke über eine Mindestdauer tf = 34 x e + 2 ms zwischen null und 1 kA festgelegt ist;

- und einen dritten Schritt, bei dem der Stromfluss bei einer Stromstärke von 3,5 kA bis 4,5 kA über eine Dauer von mindestens 755 ms wieder aufgenommen wird, um eine Wärmebehandlung des geschweißten Bereichs auszuführen,

wobei die Summe der Dauer des ersten, zweiten und dritten Schritts höchstens 2 s, vorzugsweise höchstens 1,5 Sek., besser höchstens 1 Sek. ist.

2. Verfahren nach Anspruch 1, **dadurch gekennzeichnet, dass** bei dem zweiten Schritt der Stromfluss in der geschweißten Zone unterbrochen wird.

3. Verfahren nach einem der Ansprüche 1 oder 2, **dadurch gekennzeichnet, dass** die Bleche warmgewalzte Bleche sind.

**Claims**

1. Method for welding two steel sheets of thickness 0.10 to 6.0 mm and having the following composition in weight percent:

* 0.005 % ≤ C ≤ 0.3 %;

* 0.2 % ≤ Mn ≤ 2.0 %;

* traces ≤ Si ≤ 1.0 %;

* traces ≤ S ≤ 0.01 %;

* traces ≤ P ≤ 0.04 %;

* 10.5 % ≤ Cr ≤ 17.0 %; preferably 10.5 % ≤ Cr ≤ 14.0 %;

* traces ≤ Ni ≤ 4.0 %;

* traces ≤ Mo ≤ 2.0%;

* Mo + 2 × W ≤ 2.0 %;

* traces ≤ Cu ≤ 3 %; preferably traces ≤ Cu ≤ 0.5 %;

* traces ≤ Ti ≤ 0.5 %;

* traces ≤ Al ≤ 0.2 %;

* traces ≤ O ≤ 0.04 %;

* 0.05% ≤ Nb ≤ 1.0 %;

* 0.05% ≤ Nb + Ta ≤ 1.0 %;

* 0.25 % ≤ (Nb + Ta)/(C + N) ≤ 8;

* traces ≤ V ≤ 0.3 %;

* traces ≤ Co ≤ 0.5 %;

* traces ≤ Cu + Ni + Co ≤ 5.0 %;

* traces ≤ Sn ≤ 0.05 %;

* traces ≤ B ≤ 0.1 %;

* traces ≤ Zr ≤ 0.5 %;

* Ti + V + Zr ≤ 0.5 %;

* traces ≤ H ≤ 5 ppm, preferably traces ≤ H ≤ 1 ppm;

* traces ≤ N ≤ 0.2 %;

* (Mn + Ni) $\geq$ (Cr -10,3 - 80 $\times$ [(C + N)$^2$]);
* traces $\leq$ Ca $\leq$ 0.002 %;
* traces $\leq$ rare earths and/or Y $\leq$ 0.06 %;
* the remainder being iron and impurities resulting from steelmaking;
- the start temperature (Ms) of martensitic transformation of the sheet being $\geq$ 200 °C;
- the finish temperature (Mf) of martensitic transformation of the sheet being $\geq$ -50 °C ;
- the microstructure of the sheet containing no more than a 0.5 % volume fraction of carbides, and no more than a volume fraction of 20 % residual ferrite, the remainder being martensite;

**characterized in that** it comprises the following steps, (e) being the thickness of each of said sheets or of the thinnest amongst them:

- A first welding step lasting a time (t) in ms:

* for thicknesses (e) of 0.10 to 0.50 mm:

$$t = (40 \text{ x } e + 36) \pm 10\ \%$$

* for thicknesses (e) of 0.51 to 1.50 mm:

$$t = (124 \text{ x } e - 13) \pm 10\ \%$$

* for thicknesses (e) of 1.51 to 6.0 mm:

$$t = (12 \text{ x } e + 47) \pm 10\ \%$$

and with a clamping force (F) in daN:
* for thicknesses (e) of 0.10 to 1.50 mm:

$$F = (250 \text{ x } e + 90) \pm 10\ \%$$

* for thicknesses (e) of 1.51 mm to 6.0 mm:

$$F = (180 \text{ x } e + 150) \pm 10\ \%$$

a current being applied at this step between the welding electrodes, having an intensity of between 80 and 100 % the maximum permissible intensity corresponding to expulsion of molten metal;

- A second step at which the pressure of the electrodes is maintained and the current intensity is set at between zero and 1 kA for a minimum time tf $\geq$ 34 $\times$ e + 2 ms;
- And a third step at which the passing of current is resumed at an intensity of 3.5 kA to 4.5 kA, for a time of at least 755 ms, to apply heat treatment to the weld zone,

the sum of the times of said first, second and third steps being no more than 2 s, preferably no more than 1.5 s, better still no more than 1 s.

2. The method according to claim 1, **characterized in that** at the second step the passing of current in the weld zone is interrupted.

3. The method according to one of claims 1 or 2, **characterized in that** said sheets are hot rolled sheets.

FIG.1

FIG.2

FIG.3

FIG.4

## FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0170598 A1

- WO 2017069268 A1

**Littérature non-brevet citée dans la description**

- **VISHVESH J BADHEKA et al.** RESISTANCE SPOT WELDING OF MARTENSITIC STAINLESS STEEL (SS420)-PART I. *International Journal of Mechanical and Materials Engineering (IJMME),* 31 Décembre 2009, 328-340